# EUROPEAN PATENT SPECIFICATION

(11) **EP 3 633 861 B1**
(45) Date of publication and mention of the grant of the patent: **21.04.2021**
(21) Application number: 19201056.9
(22) Date of filing: 02.10.2019
(51) Int. Cl.: H04B 1/00, H04W 88/08

(54) **MULTIPLEXING APPARATUS AND METHOD OF USE THEREOF**
MULTIPLEXVORRICHTUNG UND VERFAHREN ZUR VERWENDUNG DAVON
APPAREIL DE MULTIPLEXAGE ET SON PROCÉDÉ D'UTILISATION

(30) Priority: 05.10.2018 GB 201816262
(43) Date of publication of application: 08.04.2020
(73) Proprietor: Radio Design Limited, West Yorkshire BD17 7DW (GB)
(72) Inventor: LUCAS, Caspar, Shipley, Yorkshire BD17 7DW (GB); SHAW, Stephen, Shipley, West Yorkshire BD17 7DW (GB)
(74) Representative: Wood, Graham

(56) References cited:
- EP-A2- 3 078 075
- WO-A2-2018/055409

## Description

This invention relates to multiplexing apparatus and to a method of use thereof, and particularly to multiplexing apparatus of a type for combining and/or splitting radio frequency (RF) signals.

Mobile phone operators seek to minimise the capital expenditure (capex) required to build a wireless network as well as minimise the ongoing operating expenditure (opex). If an operator provides 2G (2^{nd} generation mobile communication), 3G (3^{rd} generation mobile communication) and 4G (4^{th} generation mobile communication) wireless network services then a way to reduce opex is for the networks to share a cell site. However, the sharing of cell sites typically results in complex logistics relating to the installation of the cell sites.

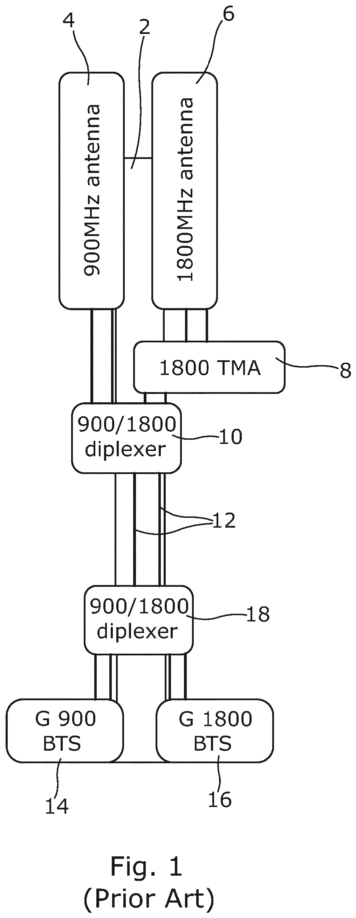

In order for two or more different wireless technology service networks to share a cell site forming part of a wireless telecommunications network, it is known to use combiner or multiplexer apparatus to allow combining and/or splitting of RF signals in different RF operating bands. For example, 2G and 3G services of a particular operator can share the same mast, with the 2G and 3G services being in different frequency operating bands (for example 900MHz and 1800MHz respectively). A typical cell site is shown in figure 1 and includes a mast 2, at the top of which is mounted a 900MHz antenna 4 for transmitting and/or receiving one or more RF signals in the 900MHz frequency band, and a 1800MHz antenna 6 for transmitting and/or receiving one or more RF signals in the 1800MHz frequency band. A tower mounted amplifier (TMA) 8 can be provided at the top of the mast 2 for amplifying the received RF signals connected to the 1800MHz antenna 6 and/or 900MHz antenna 4. Multiplexing apparatus in the form of a diplexer 10 is provided at the top of the mast 2 to allow combining of the RF signals being received by the 900MHz and 1800MHz antennae 4, 6 for passage down common feeder cables 12, and for splitting of the RF signals being transmitted from a 900MHz base station (BTS) 14 and a 1800MHz base station (BTS) 16 located at the base of mast 2. A diplexer apparatus 18 is also provided at the base of mast 2 to allow combining of the RF signals transmitted from the 900MHz BTS 14 and the 1800MHz BTS 16, and for splitting of the 900MHz and 1800MHz RF signals being received from the common feeder cables 12. Each BTS 14, 16 typically includes a transceiver that generates one or more RF signals for transmission to a mobile phone unit via the antennae as well as receiving one or more RF signals from a mobile phone unit via antennae.

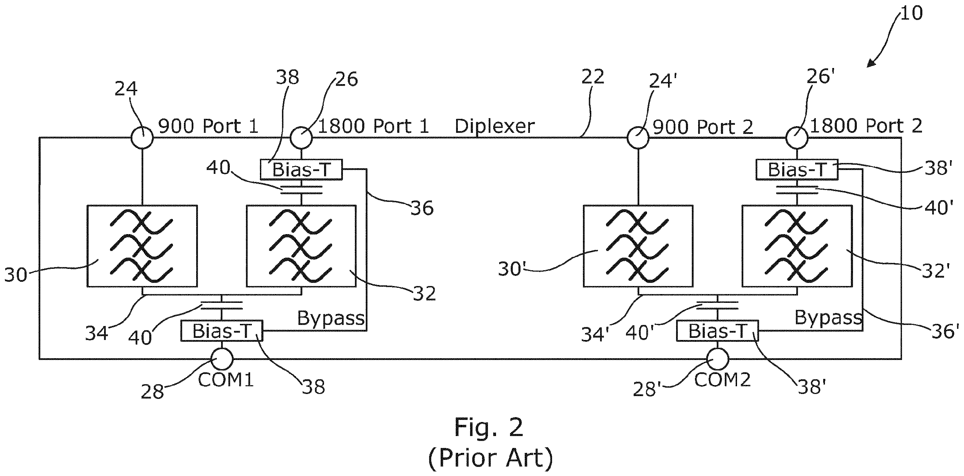

Figure 2 is a detailed circuit diagram showing the filter arrangement of a conventional diplexer unit 10. The unit 10 typically comprises a housing 22 having a 900MHz antenna channel port 24 for connection to a 900MHz antenna and a 1800MHz antenna channel port 26 for connection to a TMA. In the illustrated example the unit 10 is provided as a dual unit, in that there is a mirror image of the components within the unit, with a second 900MHz antenna channel port 24' and a second 1800MHz antenna channel port 26'. Common ports 28, 28' are provided for transmitting and/or receiving the combined 1800MHz and 900MHz along a common feeder cable.

Diplexer Unit 10 includes 900MHz filters 30, 30' provided between 900MHz channel ports 24, 24' and common ports 28, 28' for allowing the passage of transmit and/or receive RF signals in the 900MHz frequency band, but for substantially preventing passage of transmit and/or receive RF signals at any other frequency. Unit 10 includes 1800MHz filters 32, 32' provided between 1800MHz channel ports 26, 26' and common ports 28, 28' for allowing the passage of transmit and/or receive RF signals in the 1800MHz frequency band, but for substantially preventing passage of transmit and/or receive RF signals at any other frequency. The ends 34, 34' of filters 30, 32 and 30', 32' are multiplexed together to provide a common signal path connected to common port 28, 28'.

Conventional diplexer unit 10 typically comprises a direct current (DC) and low frequency (typically below 15MHz) control signal bypass path 36, 36'. This allows DC current and low frequency control signals used to power and control RF equipment at the top of the mast respectively, such as TMAs or motorised antenna position equipment (i.e. Remote Electrical Tilt (RET) motors), to bypass filters 30, 32, 30', 32' and be received by the RF equipment. The low frequency control signals are often referred to as Antenna Interface Standards Group (AISG) control signals and relate to standard based control signals for digital remote control and monitoring of antenna line devices in wireless communication systems. Bias T's 38, 38' are provided either side of 1800MHz filters 32, 32' in the illustrated example to allow DC and low frequency signals to be transmitted to the TMA in the 1800MHz frequency path via bypass path 36, 36'. DC blocks in the form of capacitors 40, 40' are provided between the Bias T's 38, 38' and the filters 32, 32' to prevent DC and low frequency signals entering the 1800MHz RF filter 32, 32' as they may provide a DC short circuit and/or damage the same.

The diplexer unit 18 located at the base of the mast is typically the same as diplexer unit 10 located at the top of the mast but in reverse (i.e. the common connection port is at the output side of the diplexer unit and the 900MHz and 1800MHz channel connection ports are at the input side of the unit when in a transmission direction).

Conventionally, the DC and low frequency signal bypass paths 36, 36' have been hardwired and this generates a logistical problem due to the large number of variables and requirements for which paths in the cell site need to be connected. For example, both the 900MHz and 1800MHz may have equipment on the mast that requires DC power and/or low frequency control signals, only one of the 900MHz or 1800MHZ RF signal paths may need DC and/or low frequency control signals, or the requirements of the mast could change over time due to changes in the customer requirements of RF equipment used on the mast. As such, a large number of parts need to be carried by the cell site installer to be able to meet the specific customer requirements at the cell site and, due to the complexity of the wiring, it is common for cell site installers to fit incorrect multiplexing equipment on site and/or to incorrectly wire the equipment together. This results in delays to the installation of the cell site and deployment of the mobile network and typically results in increased costs to the customer and/or installation company.

In an attempt to overcome this problem, the present applicants have a patent EP3078075 which relates to the provision of a control mechanism for multiplexing apparatus which automatically determines whether a bypass path of the apparatus can be enabled (switched on) or disabled (switched off) based on detection and/or measurement of one or more electrical values at or associated with a channel and/or common connection port. The automated determination of bypass path enablement and/or disablement by the apparatus prevents an installer from making an incorrect connection with the multiplexing apparatus and prevents the time delays and expense associated with installation mistakes in the field.

During configuration and commissioning of a cell site, when installing the two or more BTSs with the multiplexing apparatus, a fitter is required to select the presence of a TMA within the cell site arrangement in the commissioning software associated with each BTS that receives a signal that has passed through a TMA. If, during the commissioning process, the BTS is informed that a TMA is present, some BTS's automatically enable their DC supply that is intended to power the TMA. Thus, if there is DC powered equipment (that could for example be a TMA or remote electrical tilt (RET) motor) on the mast, more than one BTS -could have its DC supply enabled to provide DC, and the multiplexing apparatus automatically determines which one of the BTSs is actually going to supply the DC by determining whether a bypass path associated with each channel and/or common port is enabled or disabled. Although the multiplexing apparatus works well in ensuring that it is installed correctly at the cell site with the BTSs and that only one of the BTSs is connected, in a DC sense, to the masthead equipment, it has been found that the multiplexing apparatus can result in the activation of an alarm in a BTS which is set up to supply DC but which is not chosen by the multiplexing apparatus to supply the DC. The BTS as monitors the current being supplied by the DC supply and if none is being supplied it reports an error. An alarm is then typically activated in the BTS and is detected by monitoring equipment set up to monitor the activity of the cell site. This typically results in an engineer having to visit the cell site to determine why there is alarm activation in the BTS, even when the BTS is actually functioning normally.

It is therefore an aim of the present invention to provide multiplexing apparatus that overcomes the abovementioned problems.

It is a further aim of the present invention to provide a method of using multiplexing apparatus that overcomes the abovementioned problems.

According to a first aspect of the present invention there is provided multiplexing apparatus according to claim 1.

Preferably, the electrical load means is an active load.

Thus, the present invention provides at least one of the channel connection ports of the multiplexing apparatus with active load. This allows DC to pass through the at least one channel connection port, without flowing to the common connection port, thereby "tricking" any BTS, RF transmitter and/or receiver associated with the channel connection portion into detecting it is supplying DC in the correct manner that it has been commissioned/set up to do. Thus, in multiplexing apparatus where there are two or more channel connection ports, this allows DC to be supplied to all channel connection ports, even though DC is only being allowed or enabled to flow from one channel connection port to a common connection port.

Preferably the active load is defined as any active load or circuitry which is capable of drawing an electrical current in use. Preferably the current drawn by the active load or circuitry is a constant or substantially constant current over a range of possible voltage inputs. For example, the range of voltage inputs could be approx. 10V-30V. Preferably the electrical current drawn by the active load means is dissipated in some other energy form, such as for example, as heat.

In one embodiment the active load and/or circuitry includes one or more resistors.

In one embodiment the multiplexing apparatus is provided in or associated with a housing. Preferably the active load is arranged relative to the housing in such a manner to allow heat to be dissipated from the active load via the apparatus housing.

Preferably the apparatus is provided with a good thermal pathway between the active load and the housing to allow efficient dissipation of heat as a result of an electrical current being drawn by the active load.

In one embodiment heat sink means can be provided on or associated with the active load and/or the apparatus housing to allow efficient dissipation of heat in use.

In one embodiment the multiplexing apparatus includes two or more channel connection ports and active load is associated with each of the two or more channel connection ports.

In one embodiment the multiplexing apparatus includes two or more channel connection ports and the active load is only associated with one channel connection port or only some of the channel connection ports (but not all of the channel connection ports).

In one embodiment the active load associated with a channel connection port may be provided in the "on" or enabled mode at all times during operational use of the multiplexing apparatus. In this arrangement the active load is constantly or substantially constantly drawing an electrical current from the channel connection port in use of the apparatus. This may occur, for example, if a DC bypass pathway is hard wired in the apparatus on a different channel connection port to the channel connection port with the active load.

Preferably a switch or switch means are provided between the at least one channel connection port and the active load to allow the active load to be selectively moved between the "on" or enabled mode, and the "off' or disabled mode in use.

For example, with the switch means in the "on" condition, the active load are connected to the at least one channel connection port for DC. If the switch means are in the "off' condition, the active load are disconnected to the at least one channel connection port for DC.

Preferably the switch means are moved between the "on" condition and the "off' condition depending on whether the channel connection port with which the switch means are associated with is set up/commissioned to provide DC, is required to provide DC passage to the at least one common connection port, what electrical and/or RF equipment is associated with the channel connection port and/or common connection port and/or the like.

In one embodiment control means are provided on or associated with the active load to allow control of the switch means between the "on" and "off' conditions, to move the active load between the "on" or enabled mode and the "off' of disabled mode, to allow control of the electrical current and/or voltage being drawn by the active load and/or the like.

Preferably the control means can include a control unit, micro-processing means and/or the like.

In one embodiment the apparatus includes at least one bypass path provided between the at least one common connection port and the at least one channel connection port for the passage of direct current (DC) and/or one or more control signals therealong in use. For example, the one or more control signals could include one or more AIGS signals.

Preferably the at least one bypass path is provided to bypass at least part of the one or more RF paths connected between a common connection port and a channel connection port. For example, the bypass path is provided so as to allow DC and/or one or more control signals to pass therealong in use but to prevent or substantially prevent the passage of one or more RF signals therealong in use. Preferably one or more of the RF pathways in the apparatus are arranged so as to prevent or substantially prevent the passage of DC and/or one or more control signals therealong in use.

In one embodiment each or two or more of the channel connection ports has a bypass path between it and the at least one common connection port.

Preferably the channel connection ports connected with a bypass path to the common connection part are the same types of connection ports as the channel connection ports with the active load associated with the same.

In one embodiment the at least one bypass path is hardwired in the apparatus. In this example, the bypass path is typically in a permanently enabled condition in that it arranged to constantly or substantially constantly supply DC and/or one or more control signals therealong when the apparatus is in use.

In one embodiment the at least one bypass path is selectively movable between an enabled or "on" condition and a disabled or "off' condition in use.

Preferably a switch or switch means are provided on or associated with the at least one bypass path to allow the path to be moved between the "on" or enabled and "off' or disabled conditions in use.

Preferably control means can be provided on or associated with the at least one bypass path to allow the bypass path to be moved between the enabled or "on" condition and the disabled or "off' condition.

The bypass path control means can be the same or different to the control means provided on or associated with the active load.

In one embodiment the at least one bypass path control means are arranged to allow detection of one or more electrical values at or associated with one or more of the common and/or channel connection ports and to control whether the at least one bypass path is enabled or disabled according to the one or more electrical values detected.

Preferably the control means is arranged to detect which of the common and/or channel connection ports has a DC voltage present at the port, and wherein if the common connection port is found to have a DC voltage present, the control means is able to determine whether the apparatus is functioning in a de-multiplexing mode in a transmission direction or is located at the top of a mast. If one or more of the channel connection ports is found to have a DC voltage present, the control means is able to determine the apparatus is functioning in a multiplexing mode in a transmission direction or is positioned at a base of a mast.

In one embodiment a common connection port can be defined as an input and/or an output connection port on the apparatus through which two or more combined RF frequencies or frequency ranges can pass. A channel connection port can be defined as an input and/or an output connection port on the apparatus through which a non-combined or single RF frequency or frequency range passes.

In one embodiment a common connection port can be defined as a port that all signals passing through a single multiplex apparatus pass through, and a channel connection port can be defined as a port where only a sub-set of the signals pass through. The sub-set of signals is typically differentiated on the basis of signal frequency.

In one embodiment the channel connection ports comprise first and at least second channel connection ports for allowing the transmission and/or receiving of one or more RF signals at a first frequency or frequency range and at least a second frequency or frequency range respectively. The common connection port allows the transmission and/or receiving of one or more RF signals at any or all of said first and at least second radio frequencies or frequency ranges in use.

Preferably the first radio frequency or frequency range is different, or preferably significantly different, to the at least second radio frequency or frequency range. In one example, the term significantly different means a frequency or frequency range that is non-adjacent or non-overlapping to another frequency or frequency range. The term frequency range can include a set of non-contiguous frequencies in one example.

Preferably a first RF pathway is provided in the apparatus between the first channel connection port and the common connection port for the transmission and/or receiving of one or more RF signals at the or a first RF frequency or frequency range.

Preferably at least a second RF pathway is provided in the apparatus between the at least second channel connection port and the common connection port for the transmission and/or receiving of one or more RF signals at the or at least a second RF frequency or frequency range.

Preferably the active load means can be directly provided in or associated with the first and/or at least second RF pathways.

In one embodiment one or more RF filters are provided in the first RF pathway for allowing passage of one or more RF signals at the first RF frequency or frequency range therethrough, but preventing or substantially preventing the passage of one or more RF signals at the at least second RF frequency and/or other RF frequencies or frequency ranges.

In one embodiment one or more RF filters are provided in the at least second RF pathway for allowing passage of one or more RF signals at the at least second RF frequency or frequency range therethrough, but preventing or substantially preventing the passage of one or more RF signals at the first and/or other RF frequencies or frequency ranges.

In the embodiment where the active load means is associated directly with the first and/or second RF pathways, preferably the active load is provided between the channel connection port and the one or more RF filters in the RF pathway(s).

Preferably a bypass path is provided in the first and/or at least second RF pathway to bypass at least one or more RF filters in said pathway.

In the embodiment where the active load is provided in or associated with a bypass path, preferably the active load is provided between the switch means of the bypass path and the channel connection port with the bypass path is associated.

Preferably multiplexing means or connections are provided between the first and at least second channel connection ports and the common connection port in the first and/or at least second RF pathways for separating out and/or combining one or more RF signals at the first and at least second RF frequencies or frequency ranges.

Preferably the control means of the multiplexing apparatus allows the apparatus to determine what types of connections have been made at one or more of the common and/or channel connection ports. As such, the control means can detect (in order determine the type of connections) where the apparatus has been fitted in a radio frequency cell site arrangement, what equipment the apparatus has been fitted to, what mode the apparatus needs to function in (i.e. a multiplexing mode or a de-multiplexing mode) and/or the like. For example, if the apparatus is fitted at a base of a mobile phone mast, it typically has a plurality of channel connection ports connected to one or more base stations (BTSs) and a common connection port for connection to a common feeder cable for transmission of one or more RF signals up and/or down the mast. If the apparatus is fitted towards a top of a mobile phone mast, it typically has a common connection port connected to a common feeder cable and a plurality of channel connection ports for connection to one or more antennae, TMAs, RETs and/or the like. The control means can determine which orientation the apparatus is acting in and therefore whether the apparatus needs to act in a multiplexing mode in a particular receive or transmit direction (i.e. mode to combine two or more RF signal paths together on a common feed path) and/or a de-multiplexing mode in a particular receive or transmit direction (i.e. mode to separate two or more signal paths out from a common feed into two separate RF signal paths). The mode of operation of the apparatus will obviously depend on whether it relates to one or more transmitted signals or one or more receive signals. It is to be noted that the multiplexing apparatus can operate in both modes at the same time if transmitting and receiving signals simultaneously.

Thus, in one embodiment the multiplexing apparatus can be capable of operation in either a RF multiplexing mode with regard to a transmission direction, wherein one or more transmitted and/or received RF signals are arranged to pass through the apparatus between or from a plurality of channel connection ports to a single or common output connection port; a RF demultiplexing mode with regard to a transmission direction, wherein one or more transmitted and/or received RF signals are arranged to pass through or from the apparatus between a single or common input connection port to a plurality of channel connection ports; or can be capable of operation in either a RF multiplexing mode or a RF de-multiplexing mode, with the mode of operation determined by the apparatus.

In a further aspect of the invention there is provided a method of using a cell site arrangement according to claim 14.

Thus, the apparatus of the present invention in one example can determine whether it has been connected at a base of a mast of a cell site between a plurality of BTSs and a common feeder cable, or it can determine whether it has been connected at a top of a mast of a cell site between a common feeder cable and one or more antenna and/or one or more other power consuming items of apparatus.

In the former example, when the apparatus is operating in a RF multiplexing operational mode in a transmission direction, typically only one of the plurality of channel connection ports needs to supply DC power and/or one or more control signals through the apparatus. As such, the control means selects one bypass path connected between a channel connection port and a common connection port for the supply of DC and control signals and enables this bypass path. The control means disables one or more other bypass paths in the apparatus.

Preferably with one or more other bypass paths disabled in the apparatus, the control means enables the active load associated with said other bypass paths.

Preferably once the control means has detected one or more electrical values, the orientation, position, type of connection, the equipment fitted to the apparatus and/or mode of operation of the apparatus, the control means switches the bypass path into an enabled and/or disabled position and the bypass path remains in said enabled and/or disabled position permanently and/or until further intervention by a user is undertaken to change the operational mode, operational status, one or more electrical values, type of connections, the equipment fitted to the apparatus and/or the like of the apparatus and thus the enablement of one or more bypass paths in the apparatus.

Preferably once the control means has moved the active load means between an enabled or disabled mode, the active load means remains in this mode permanently and/or until further intervention by a user is undertaken to change the operational mode, operational status, one or more electrical values, type of connections, the equipment fitted to the apparatus and/or the like.

The control means determines the RF mode of operation and/or the orientation of the apparatus by detecting which of the common and/or channel connection ports is initially powered (i.e. the control means detects whether DC, voltage or an electrical value is present at the connection port). If the common connection port is found to be powered, the control means can determine that the apparatus is orientated in a de-multiplexing mode in a transmission direction or is positioned at the top of the mast of a cell site arrangement (i.e. is receiving power from a common feeder cable). If one or more of the channel connection ports are found to be powered, the control means can determine that the apparatus is orientated in a multiplexing mode in a transmission direction or is positioned at the base of the mast (i.e. is receiving power from one or more BTSs).

If DC, voltage or one or more electrical values is detected at a plurality of channel connection ports during an initial operational mode set up procedure of the apparatus on site in use, typically only one of the channel connection ports is selected as the DC power source and/or control signal or AISG control signal source. This selection is preferably based on the control means identifying the channel connection port with the highest priority based on a pre-defined set of rules. The bypass path associated with the selected port is then typically enabled and the bypass paths associated with the other non-selected ports are disabled.

Preferably each channel connection port on the apparatus is provided with a pre-defined priority or rule associated with the same such that when the control means detects DC, voltage or electrical value at a plurality of channel connection ports, it can identify which channel connection port has the highest priority and thus which channel port should be used as the DC power source and/or control signal source.

In one embodiment, if one or more bypass paths are enabled or switched on, DC power and/or one or more control signals can pass through the channel and common connection ports between which the one or more bypass paths are connected. If one or more bypass paths are disabled or switched off, the DC power and/or one or more control signals are prevented from being passed through the channel and common connection ports between which the one or more bypass paths are connected but are instead passed to the active load means.

In one embodiment, one or more channel ports have both an associated bypass path to the common port and at least of these ports also has an associated active load. If DC is detected on one channel port only, the associated DC bypass path is enabled / switched on. If DC is detected on more than one channel port the DC bypass path associated with one of the channel ports, according a predefined hierarchy, is enabled / switched on and any other channel, where DC is detected and has an associated active load, will have the associated active load enabled.

The one or more electrical values being detected and/or measured by the control means can include any or any combination of electrical current, DC, voltage, electrical impedance, electrical resistance and/or the like.

Preferably the control means controls enablement and/or disablement of one or more bypass paths in the apparatus when an electrical value is measured at an associated common and/or channel connection port (i.e. at a common and/or channel connection port with which the bypass path is connected) above or below a pre-determined threshold value.

In one embodiment the control means disables one or more bypass paths if a short circuit is detected at one or more associated channel and/or common connection ports (i.e. at a channel and/or common connection port with which the bypass path is connected). The detection of a short circuit typically means that an antenna is connected directly to a channel connection port and no DC power and/or control signals should be supplied through the channel connection port (i.e. the DC and control signal bypass path is disabled for that associated port).

If an electrical impedance above a pre-determined threshold value is measured at a channel connection port via the control means, the control means enables the bypass path associated with that channel connection port. Detection of an electrical impedance above a pre-determined threshold value typically means that an item of electrical equipment requiring a power source and/or control signals is connected to the channel connection port. As such, the control means enables the bypass path, thereby allowing DC and/or control signals to pass through the channel connection port.

Preferably the apparatus has a plurality of bypass paths and two or more of the bypass paths each have one or more electrical switches associated with the same to allow the bypass paths to be moved to or between disabled and enabled conditions.

Preferably the plurality of electrical switches are provided in parallel in the electrical circuitry of the control means.

In one embodiment lightning strike protection means or mechanism can be provided on or associated with the one or more electrical switches and/or control means circuitry to switch the bypass path and/or active load means off in the event of the apparatus being hit by lightning.

In one embodiment each channel and/or common connection port has or employs a mechanism to determine whether the electrical impedance of an external system or apparatus (i.e. cell site apparatus external to the multiplexing apparatus) is within a pre-determined range. If a channel and/or common connection port is to be used as an output port then it is necessary to ascertain the electrical impedance of the external system before the port is enabled for output. For example, during a checking phase of the control means operation, the control means switches a (relatively small, such as approximately 1-50mA and preferably 10mA) constant current source to the connection port and the voltage at the port is monitored. The level of the detected voltage is indicative of the impedance of the external system or apparatus and can be used by a port detection algorithm to decide whether the bypass path associated with that port can be enabled.

Preferably the control means includes microprocessing means, electric circuitry and/or memory means to provide processing, control and/or storage of pre-determined data.

According to a further embodiment of the present invention there is provided a cell site arrangement including multiplexing apparatus. One or more features of a typical cell site arrangement as set out anywhere in this document can be included.

Embodiments of the present invention will now be described with reference to the accompanying figures, wherein:
Figure 1 (PRIOR ART) is an example of a conventional cell site arrangement;
Figure 2 (PRIOR ART) is an example of a circuit diagram showing the filter arrangement of a conventional diplexer unit;
Figures 3a-3d show examples of a circuit diagram including the RF and DC paths of a multiplexer according to embodiments of the present invention, wherein:

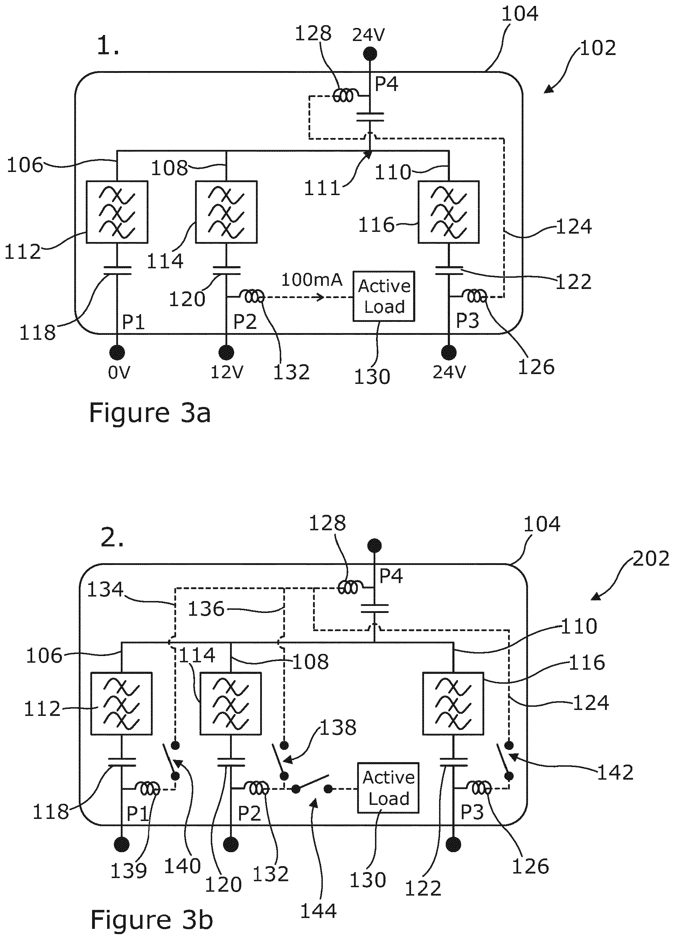

Figure 3a shows a DC bypass path hardwired between channel connection port P3 and the common connection port P4 and an active load is associated with channel connection port P2;
Figure 3b shows DC bypass paths provided between all channel connection ports P1, P2 and P3 and the common connection port P4 but where DC is disabled for all ports P1, P2, P3 and the active load associated with channel connection port P2 is disabled;

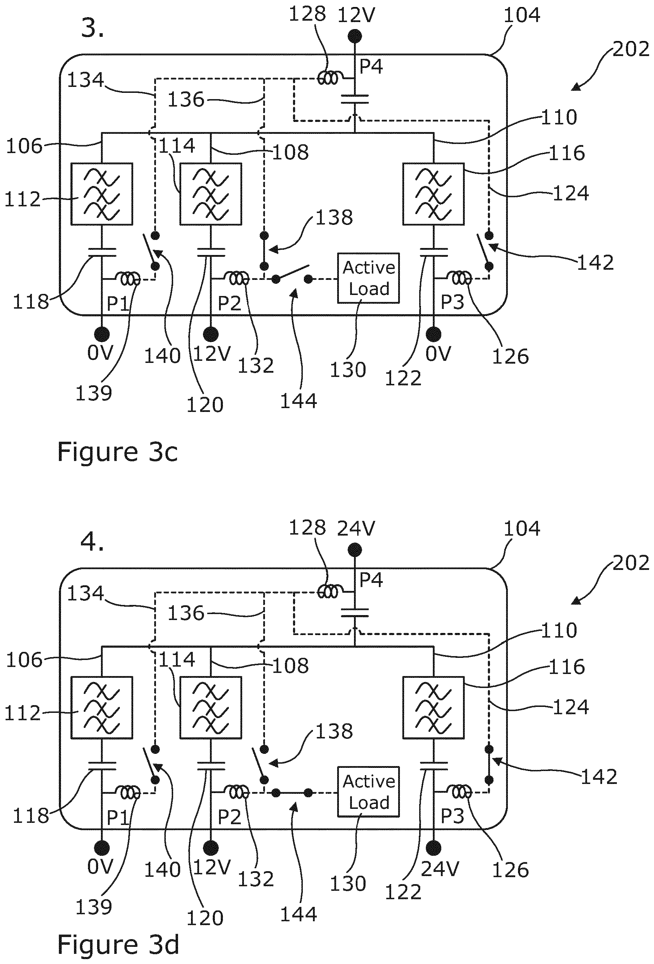

Figure 3c shows the arrangement in Figure 3b but where the DC bypass path between channel connection port P2 and common connection port P4 is enabled and the active load associated with channel connection port P2 is disabled;
Figure 3d shows the arrangement in Figure 3b but where the DC bypass path between channel connection port P3 and the common connection port P4 is enabled and the active load associated with channel connection port P2 is enabled.

Referring firstly to figure 3a, there is illustrated an example of a multiplexer or trip lexer 102 including a housing 104 having three channel connection ports P1, P2 and P3 and a common connection port P4. Each channel connection port P1, P2, and P3 in this example is typically connectable to a separate BTS (not shown) which transmits and/or receives one or more radio frequency signals at first, second and third radio frequencies respectively. The first, second and third radio frequencies are typically different to each other. The common channel connection port P4 is typically connectable to a TMA (not shown) or some other DC powered electrical item via a common feeder cable (not shown).

Each channel connection port P1, P2, P3 has a radio frequency pathway 106, 108, 110 which is multiplexed via multiplex connection 111 to common connection port P4 for allowing the transmission and/or receipt of one or more radio frequency signals at the first, second and third radio frequencies in use. Each radio frequency pathway 106, 108, 110 has filter means 112, 114, 116 provided in the same to selectively filter radio frequency signals that can pass though the same in use. For example, filter means 112 allows RF signals of the first RF frequency to pass through the same but prevents or substantially prevents RF signals other than the first RF frequency from passing through the same in use. Filter means 114 allows RF signals of the second RF frequency to pass through the same but prevents or substantially prevents RF signals other than the second RF frequency from passing through the same in use. Filter means 116 allows RF signals of the third RF frequency to pass through the same but prevents or substantially prevents RF signals other than the third RF frequency from passing through the same in use.

Each RF pathway 106, 108, 110 has a capacitor 118, 120, 122 associated with same between the filter means 112, 114, 116 and the channel connection port P1, P2, P3 respectively to prevent or substantially prevent DC from passing along the RF pathways 106, 108, 110 in use.

In this embodiment, a bypass path 124 is hardwired between channel connection port P3 and common connection port P4 to allow the passage of DC and/or one or more control signals between port P3 and port P4, without having to pass along RF pathway 110. Thus, bypass path 124 is permanently enabled in this embodiment. An example of a voltage of 24V is passing between port P3 and P4. Inductors 126, 128 are provided at either end of the bypass path 124. The inductors 126, 128 and the capacitor 122 forms a bias-tee for the RF pathway 110.

In this embodiment, an active load 130 is provided in accordance with the present invention. The active load provides circuitry that draws a constant electrical current over a range of different voltages. More particularly, active load 130 is associated with channel connection port P2.

An inductor 132 is provided in the active load path between port P2 and the active load 130 to prevent RF signals from passing into the active load in use. The inductor 132 and capacitor 120 forms a bias-tee for the RF pathway 108.

In the illustrated example, the active load draws an electrical current of 100mA for a 12V electrical supply from P2.

Channel connection port P1 is not provided with an active load or a bypass path and is not enabled for DC or one or more control signals.

Thus, in this embodiment, BTSs associated with P2 and P3 are both enabled to provide DC in the set up mode/commissioning process. Since only P3 is required to supply DC to port P4, the active load allows electrical current to be drawn from P2, thereby tricking the BTS associated with P2 that DC is correctly being provided to the apparatus 102 and that it does not need to activate an alarm.

Referring now to figure 3b, there is illustrated an embodiment of a triplexer 202 wherein bypass paths 134, 136 are provided with RF pathway 106 and RF pathway 108 respectively in addition to the bypass path 124 provided with RF pathway 110. Thus, each RF pathway in this embodiment has a DC and/or control signal bypass path. The same reference numerals have been used in this embodiment to refer to the same features previously described.

In contrast to the embodiment shown in figure 3a, each bypass path 124, 134, 136 in the embodiment shown in figure 3b is selectively movable between an enabled condition, wherein DC and/or one or more control signals can pass along the same in use, and a disabled condition, wherein DC and/or one or more control signals are prevented from passing along the same in use. A switch 138, 140, 142 is typically provided in bypass paths 136, 134 and 124 respectively to allow the bypass paths to be moved between the enabled and disabled conditions in use.

Control means (not shown) are provided or associated with switches 138,140, 142 to allow control of the same in use.

An inductor 139 is provided in bypass path 134 between switch 140 and port P1 to prevent RF signals from travelling along bypass path 134. Inductor 139 and capacitor 118 form a bias-tee for RF pathway 106.

Also in contrast to the embodiment shown in figure 3a, active load 130 is provided in bypass path 136 and is also provided with a switch 144 between the active load 130 and port P2, thereby allowing selective control of the active load 130 in use. Thus, switch 144 allows the active load 130 to be moved between an enabled mode, wherein the active load 130 can draw electrical current from port P2, and a disabled mode, wherein the active load 130 is prevented from drawing electrical current from Port P2.

In the embodiment in figure 3b, there is no electrical voltage being provided between P1, P2, P3 and P4 and so none of the bypass paths 134, 136, 124 are enabled for DC. Switches 140, 138 and 142 are all in the "off' condition. In addition, the active load 130 is not enabled for DC and switch 144 is in the "off' condition.

The embodiment shown in figure 3c is similar to that shown in figure 3b but a voltage of 12V is being supplied to port P2. Thus, the BTS associated with port P2 has been set up to supply DC to the common control port P4. The BTSs associated with ports P1 and P3 have not been set up to supply DC to the common control port P4 and so are not providing any voltage to the ports P1 and P3. As such, the bypass path 136 is enabled for DC and/or one or more control signals and the switch 138 is in an "on" condition. The active load 130 is not required because the BTS associated with port P2 is correctly drawing electrical current from the same. As such, switch 144 associated with the active load 130 is in a disabled mode.

In the embodiment shown in figure 3d, this is typically using the auto-bypass function described in EP3078075. The apparatus is similar to that shown in figures 3b and 3c but the BTSs associated with ports P2 and P3 have been set up to provide voltage/DC. The BTS associated with P1 is not set up to provide voltage/DC. However, due to the hierarchy of the ports P2 and P3, port P3 has priority over port P2. As such, bypass path 124 associated with port P3 is moved to an enabled condition to allow DC and/or one or more control signals to pass between port P3 and port P4. Switch 142 is moved to an "on" condition. The bypass path 136 provided between port P2 and port P4 is disabled and switch 138 is in an "off' condition.

In order to prevent the alarm provided in the BTS associated with P2 from being activated as a result of the BTS detecting that DC is not being utilised, the active load 130 associated with port P2 is moved to an enabled mode and switch 144 is moved to an "on" condition. Active load 130 is therefore able to draw electrical current from port P2 which "tricks" the BTS associated with port P2 into detecting that it is correctly supplying DC as it has been set up to do. Thus, no alarm is activated in the BTS.

It will be appreciated that any number of active loads can be provided and an active load can be provided with each channel connection port if required.

## Claims

1. Multiplexing apparatus (102, 202) including at least one common connection port (P4) and at least two channel connection ports (P1, P2, P3), two or more radio frequency pathways (106, 108, 110) connected between said at least one common connection port (P4) and said at least two channel connection ports (P1, P2, P3) for transmitting and/or receiving two or more radio frequency signals therealong and **characterised in that** an electrical load means (130) is provided in/or associated with at least one of said at least two channel connection ports (P1, P2, P3) such that:
the electrical load means (130) can draw an electrical current from said at least one of said at least two channel connection ports (P1, P2, P3) but said at least one of said at least two channel connection ports (P1, P2, P3) is not connected, in a DC sense, to the common connection port (P4); and
the electrical load means (130) associated with said at least one of said at least two channel connection ports (P1, P2, P3) is moveable between an on, or enabled, mode in which it is able to draw an electrical current from said at least one of said at least two channel connection ports (P1, P2, P3), and an off, or disabled, mode wherein it is not able to draw an electrical current from said at least one of said at least two channel connection ports (P1, P2, P3).

2. Apparatus according to claim 1 **characterised in that** the electrical load means (130) is an active load and switch means (138, 140, 142) are provided between said at least one of said at least two channel connection ports (P1, P2, P3) and the active load to allow the active load to be selectively moved between the on or enabled mode and the off or disabled mode.

3. Apparatus according to any preceding claim **characterised in that** the electrical load (130) is an active load and control means are provided on or associated with the active load to allow control of the switch means (138, 140, 142) between the on or enabled mode and the off or disabled mode and/or to allow control of the electrical current or voltage being drawn by the active load.

4. Apparatus according to claim 1 **characterised in that** the move between said enabled and disabled modes depends on whether the at least one of said at least two channel connection ports (P1, P2, P3) with which switch means (138, 140, 142) are associated is set up/commissioned to provide DC, is required to provide DC passage to the at least one common connection port (P4) and/or RF equipment associated with the at least one of said at least two channel connection ports (P1, P2, P3) and/or the at least one common connection port (P4).

5. Apparatus according to claim 1 **characterised in that** there is provided at least one bypass path (124, 134, 136) provided between the at least one common connection port (P4) and at least one of said at least two channel connection ports (P1, P2, P3) for the passage of DC and/or one or more control signals therealong in use and the at least one bypass path (124, 134, 136) is provided to bypass at least part of the two or more radio frequency paths (106, 108, 110) connected between the at least one common connection port (P4) and said at least two channel connection ports (P1, P2, P3).

6. Apparatus according to claim 5 **characterised in that** the at least one bypass path (124, 134, 136) is selectively moveable between an on, or enabled, condition and an off, or disabled, condition; and control means are provided which detect one or more electrical values at or associated with one or more of the at least one common connection ports (P4) and/or the at least two channel connection ports (P1, P2, P3) to control whether the at least one bypass path (124, 134, 136) is enabled or disabled.

7. Apparatus according to any of claims 5 or 6 **characterised in that** the electrical load means (130) is provided in or associated with the at least one bypass path (124, 134, 136).

8. Apparatus according to claim 3 **characterised in that** the control means are arranged to detect which of the at least one common connection ports (P4) and/or the at least two channel connection ports (P1, P2, P3) has DC voltage present at the port, and if the at least one common connection port (P4) is found to have DC voltage present, the control means is able to determine whether the apparatus (102,202) is functioning in a demultiplexing mode in a transmission direction or is located at the top of a mast (2) or if one or more of the at least two channel connection ports (P1, P2, P3) is found to have DC voltage present, the control means is able to determine if the apparatus (102, 202) is functioning in a multiplexing mode in a transmission direction or is positioned at a base of a mast (2).

9. Apparatus according to any of the preceding claims **characterised in that** the at least one common connection port (P4) is defined as an input and/or an output connection port on the apparatus (102, 202) through which two or more combined RF frequencies or frequency ranges can pass and each of the at least two channel connection ports (P1, P2, P3) are ports through which only a subset of said frequencies or frequency ranges can pass.

10. Apparatus according to any of the preceding claims **characterised in that** the two or more channel connection ports (P1, P2, P3) comprise first and at least second channel connection ports for allowing the transmission and/or reception of one or more radio frequency signals at a first frequency or frequency range and at least a second frequency or frequency range respectively, the first frequency or frequency range being different to the at least second frequency or frequency range.

11. Apparatus according to claim 10 **characterised in that** the electrical load means (130) is directly provided in or associated with the two or more radio frequency pathways (106, 108, 110) in the form of first and at least second radio frequency pathways.

12. Apparatus according to claim 1 **characterised in that** one or more of the two or more radio frequency pathways (106, 108, 110) are frequency selective radio frequency pathways.

13. Apparatus according to any of the preceding claims **characterised in that** the apparatus (102, 202) is capable of operation either in a radio frequency multiplexing mode with regard to a transmission direction wherein one or more transmitted and/or received radio frequency signals are arranged to pass through the apparatus (102, 202) between or from a plurality of the channel connection ports (P1, P2, P3) to a single or common output connection port (P4); a radio frequency demultiplexing mode with regard to a transmission direction wherein one or more transmitted and/or received radio frequency signals are arranged to pass through or from the apparatus (102, 202) between a single or common input connection port (P4) to the plurality of channel connection ports (P1, P2, P3); or in either a radio frequency multiplexing mode or a radio frequency demultiplexing mode with the mode of operation determined by the apparatus (102, 202).

14. A method of using a cell site arrangement including multiplexing apparatus (102, 202) including at least one common connection port (P4) and at least two channel connection ports (P1, P2, P3), two or more radio frequency paths (106, 108, 110) connected between said at least one common connection port (P4) and said at least two channel connection ports (P1, P2, P3) for transmitting and/or receiving two or more radio frequency signals therealong. **characterised in that** an electrical load means (130) is provided in/or associated with at least one of the at least two channel connection ports (P1, P2, P3) such that the electrical load means (130) can draw an electrical current from said at least one of said at least two channel connection ports (P1, P2, P3) but said at least one of said at least two channel connection ports (P1, P2, P3) is not connected, in a DC sense, to the common connection port (P4); and electrical load means (130) associated with said at least one of said at least two channel connection ports (P1, P2, P3) is moveable between an on, or enabled, mode in which it is able to draw an electrical current from said at least one of said at least two channel connection ports (P1, P2, P3), and an off, or disabled, mode wherein it is not able to draw an electric current from said at least one of said at least two channel connection ports (P1, P2, P3), said method including control means to determine one or more of which radio frequency operational mode the apparatus (102, 202) is operating in, the type of connection means, the location of fitting of the apparatus (102, 202) in the cell site arrangement, the equipment the apparatus (102, 202) has been fitted to, and said control means enabling and/or disabling one or more bypass paths (124, 134, 136) in the apparatus (102, 202) according to the detected operational mode and/or other detected status.

15. A method according to claim 14 **characterised in that** once the control means has detected one or more of electrical values, the orientation, position, type of connection, the equipment fitted to the apparatus (102, 202) and/or mode of operation of the apparatus (102, 202), the control means switches the bypass path (124, 134, 136) into an enabled and/or disabled position and/or moves the electrical load means (130) between the enabled or disabled mode, the bypass path (124, 134, 136) and/or electrical load means (130) remain in said enabled and/or disabled position permanently and/or until further intervention by a user is undertaken.

16. A method according to any of the claims 14 or 15 **characterised in that** the control means determines the radio frequency mode of operation and/or the orientation of the apparatus (102, 202) by detecting which of the at least one common connection port (P4) and/or the at least two channel connection ports (P1, P2, P3) is initially powered by detecting whether DC, voltage or an electrical value is present at the connection port (P1, P2, P3, P4).

17. A method according to claim 16 **characterised in that** if DC, voltage or one or more electrical values is detected at a plurality of the at least two channel connection ports (P1, P2, P3) during an initial operational mode set up procedure of the apparatus (102, 202) on site in use, one of the channel connection ports (P1, P2, P3) is selected as the DC power source and/or control signal or AISG control signal source and a bypass path (124, 134 ,136) associated with the selected port (P1, P2, P3) is enabled and the bypass paths (124, 134, 136) associated with the other non-selected ports (P1, P2, P3) are disabled.

18. A method according to claim 17 **characterised in that** each of the at least two channel connection ports (P1, P2, P3) on the apparatus (102, 202) is provided with a pre-defined priority or rule associated with the same such that when the control means detects DC, voltage or electrical value at a plurality of the channel connection ports (P1, P2, P3), it can identify which of the channel connection ports (P1, P2, P3) has the highest priority and thus which of the at least two channel connection ports (P1, P2, P3) should be used as the DC power source and/or control signal source.

## Patentansprüche

1. Multiplexvorrichtung (102, 202), die wenigstens einen gemeinsamen Verbindungsport (P4) und wenigstens zwei Kanalverbindungsports (P1, P2, P3) beinhaltet, wobei zwei oder mehr Hochfrequenzwege (106, 108, 110) zwischen dem genannten wenigstens einen gemeinsamen Verbindungsport (P4) und den genannten wenigstens zwei Kanalverbindungsports (P1, P2, P3) zum Übertragen und/oder Empfangen von zwei oder mehr Hochfrequenzsignalen daran entlang angeschlossen sind, und **dadurch gekennzeichnet, dass** ein elektrisches Lastmittel (130) in oder mit wenigstens einem der genannten wenigstens zwei Kanalverbindungsports (P1, P2, P3) bereitgestellt oder assoziiert ist, so dass:
das elektrische Lastmittel (130) einen elektrischen Strom von dem wenigstens einen der genannten wenigstens zwei Kanalverbindungsports (P1, P2, P3) ziehen kann, aber der genannte wenigstens eine der genannten wenigstens zwei Kanalverbindungsports (P1, P2, P3) in einem Gleichstromsinn nicht mit dem gemeinsamen Verbindungsport (P4) verbunden ist; und
das elektrische Lastmittel (130), das mit dem genannten wenigstens einen der genannten wenigstens zwei Kanalverbindungsports (P1, P2, P3) assoziiert ist, zwischen einem Ein- oder aktivierten Modus, in dem es elektrischen Strom von dem genannten wenigstens einen der genannten wenigstens zwei Kanalverbindungsports (P1, P2, P3) ziehen kann, und einem Aus- oder deaktivierten Modus, in dem es keinen elektrischen Strom von dem genannten wenigstens einen der genannten wenigstens zwei Kanalverbindungsports (P1, P2, P3) ziehen kann, bewegbar ist.

2. Vorrichtung nach Anspruch 1, **dadurch gekennzeichnet, dass** das elektrische Lastmittel (130) eine aktive Last ist und Schaltmittel (138, 140, 142) zwischen dem genannten wenigstens einen der genannten wenigstens zwei Kanalverbindungsports (P1, P2, P3) und der aktiven Last bereitgestellt sind, um zuzulassen, dass die aktive Last selektiv zwischen dem Ein- oder aktivierten Modus und dem Aus- oder deaktivierten Modus bewegt wird.

3. Vorrichtung nach einem der vorhergehenden Ansprüche, **dadurch gekennzeichnet, dass** die elektrische Last (130) eine aktive Last ist und Steuermittel an bzw. mit der aktiven Last bereitgestellt oder assoziiert sind, um die Steuerung der Schaltmittel (138, 140, 142) zwischen dem Ein- oder aktivierten Modus und dem Aus-oder deaktivierten Modus zuzulassen und/oder um die Steuerung des/der von der aktiven Last gezogenen elektrischen Stroms oder Spannung zuzulassen.

4. Vorrichtung nach Anspruch 1, **dadurch gekennzeichnet, dass** die Bewegung zwischen dem genannten aktivierten und deaktivierten Modus davon abhängt, ob der wenigstens eine der genannten wenigstens zwei Kanalverbindungsports (P1, P2, P3), mit dem die Schaltmittel (138, 140, 142) assoziiert sind, zum Bereitstellen von Gleichstrom eingerichtet/in Betrieb genommen ist, Gleichstromdurchgang zu dem wenigstens einen gemeinsamen Verbindungsport (P4) und/oder einer Hochfrequenz-Einrichtung, die mit dem wenigstens einen der genannten wenigstens zwei Kanalverbindungsports (P1, P2, P3) und/oder dem wenigstens einen gemeinsamen Verbindungsport (P4) assoziiert ist, bereitstellen muss.

5. Vorrichtung nach Anspruch 1, **dadurch gekennzeichnet, dass** wenigstens ein Umgehungspfad (124, 134, 136) bereitgestellt ist, der zwischen dem wenigstens einen gemeinsamen Verbindungsport (P4) und wenigstens einem der genannten wenigstens zwei Kanalverbindungsports (P1, P2, P3) für den Durchgang von Gleichstrom und/oder einem oder mehr Steuersignalen im Gebrauch daran entlang bereitgestellt ist, und der wenigstens eine Umgehungspfad (124, 134, 136) bereitgestellt ist, um die zwei oder mehr Hochfrequenzpfade (106, 108, 110), die zwischen den wenigstens einen gemeinsamen Verbindungsport (P4) und die genannten wenigstens zwei Kanalverbindungsports (P1, P2, P3) zwischengeschaltet sind, wenigstens teilweise zu umgehen.

6. Vorrichtung nach Anspruch 5, **dadurch gekennzeichnet, dass** der wenigstens eine Umgehungspfad (124, 134, 136) selektiv zwischen einer eingeschalteten oder aktivierten Bedingung und einer ausgeschalteten oder deaktivierten Bedingung bewegbar ist; und Steuermittel bereitgestellt sind, die ein oder mehr elektrische Werte erkennen, die an einem oder mehr des wenigstens einen gemeinsamen Kanalverbindungsports (P4) und/oder der wenigstens zwei Kanalverbindungsports (P1, P2, P3) sind bzw. damit assoziiert sind, um zu steuern, ob der wenigstens eine Umgehungspfad (124, 134, 136) aktiviert oder deaktiviert wird.

7. Vorrichtung nach einem der Ansprüche 5 oder 6, **dadurch gekennzeichnet, dass** das elektrische Lastmittel (130) in bzw. mit dem wenigstens einen Umgehungsweg (124, 134, 136) bereitgestellt oder assoziiert ist.

8. Vorrichtung nach Anspruch 3, **dadurch gekennzeichnet, dass** die Steuermittel angeordnet sind, um zu erkennen, an welchem des wenigstens einen gemeinsamen Verbindungsports (P4) und/oder der wenigstens zwei Kanalverbindungsports (P1, P2, P3) Gleichspannung an dem Port vorhanden ist, und wobei, falls festgestellt wird, dass an dem wenigstens einen gemeinsamen Verbindungsport (P4) Gleichspannung vorhanden ist, das Steuermittel bestimmen kann, ob die Vorrichtung (102, 202) in einer Übertragungsrichtung in einem Entbündelungsmodus funktioniert oder sich oben an einem Mast (2) befindet, oder wobei, falls festgestellt wird, dass an einem oder mehr der wenigstens zwei Kanalverbindungsports (P1, P2, P3) Gleichspannung vorhanden ist, das Steuermittel bestimmen kann, ob die Vorrichtung (102, 202) in einer Übertragungsrichtung in einem Bündelungsmodus funktioniert oder an einer Basis eines Masts (2) positioniert ist.

9. Vorrichtung nach einem der vorhergehenden Ansprüche, **dadurch gekennzeichnet, dass** der wenigstens eine gemeinsame Verbindungsport (P4) als ein Eingangs- und/oder ein Ausgangsverbindungsport an der Vorrichtung (102, 202) definiert ist, durch den zwei oder mehr kombinierte HF-Frequenzen oder -Frequenzbereiche durchgelassen werden, und jeder der wenigstens zwei Kanalverbindungsports (P1, P2, P3) Ports sind, durch die nur eine Teilmenge der genannten Frequenzen oder Frequenzbereiche durchgelassen werden.

10. Vorrichtung nach einem der vorhergehenden Ansprüche, **dadurch gekennzeichnet, dass** die zwei oder mehr Kanalverbindungsports (P1, P2, P3) erste und wenigstens zweite Kanalverbindungsports zum Zulassen der Übertragung und/oder des Empfangs von ein oder mehr Hochfrequenzsignalen auf einer bzw. einem ersten Frequenz oder Frequenzbereich bzw. wenigstens einer bzw. einem zweiten Frequenz- oder Frequenzbereich, wobei die/der erste Frequenz oder Frequenzbereich von der/dem wenigstens zweiten Frequenz oder Frequenzbereich verschieden ist.

11. Vorrichtung nach Anspruch 10, **dadurch gekennzeichnet, dass** das elektrische Lastmittel (130) direkt in bzw. mit den zwei oder mehr Hochfrequenzwegen (106, 108, 110) in der Form von ersten und wenigstens zweiten Hochfrequenzwegen bereitgestellt oder assoziiert ist.

12. Vorrichtung nach Anspruch 1, **dadurch gekennzeichnet, dass** ein oder mehr der zwei oder mehr Hochfrequenzwege (106, 108, 110) frequenzselektive Hochfrequenzwege sind.

13. Vorrichtung nach einem der vorhergehenden Ansprüche, **dadurch gekennzeichnet, dass** die Vorrichtung (102, 202) fähig ist zu Betrieb entweder in einem Hochfrequenz-Bündelungsmodus in Bezug auf eine Übertragungsrichtung, wobei ein oder mehr übertragene und/oder empfangene Hochfrequenzsignale für den Durchgang durch die Vorrichtung (102, 202) zwischen oder von mehreren der Kanalverbindungsports (P1, P2, P3) zu einem einzelnen oder gemeinsamen Ausgangsverbindungsport (P4) angeordnet sind; einem Hochfrequenz-Entbündelungsmodus in Bezug auf eine Übertragungsrichtung, wobei ein oder mehr übertragene und/oder empfangene Hochfrequenzsignale für den Durchgang durch oder von der Vorrichtung (102, 202) zwischen einem einzelnen oder gemeinsamen Eingangsverbindungsport (P4) zu den mehreren Kanalverbindungsports (P1, P2, P3) angeordnet sind; oder entweder in einem Hochfrequenz-Bündelungsmodus oder einem Hochfrequenz-Entbündelungsmodus, wobei der Betriebsmodus von der Vorrichtung (102, 202) bestimmt wird.

14. Verfahren zur Verwendung einer Zellenstandortanordnung, die eine Multiplexvorrichtung (102, 202) beinhaltet, die wenigstens einen gemeinsamen Verbindungsport (P4) und wenigstens zwei Kanalverbindungsports (P1, P2, P3) beinhaltet, wobei zwei oder mehr Hochfrequenzpfade (106, 108, 110) zwischen den genannten wenigstens einen Verbindungsport (P4) und die genannten wenigstens zwei Kanalverbindungsports (P1, P2, P3) geschaltet sind zum Übertragen und/oder Empfangen von zwei oder mehr Hochfrequenzsignalen daran entlang,
**dadurch gekennzeichnet, dass** ein elektrisches Lastmittel (130) in bzw. mit wenigstens einem von den wenigstens zwei Kanalverbindungsports (P1, P2, P3) bereitgestellt oder assoziiert ist, so dass das elektrische Lastmittel (130) einen elektrischen Strom von dem genannten wenigstens einen der genannten wenigstens zwei Kanalverbindungsports (P1, P2, P3) ziehen kann, aber der genannte wenigstens eine der genannten wenigstens zwei Kanalverbindungsports (P1, P2, P3) in einem Gleichstromsinn nicht mit dem gemeinsamen Verbindungsport (P4) verbunden ist; und
das elektrische Lastmittel (130), das mit dem genannten wenigstens einen der genannten wenigstens zwei Kanalverbindungsports (P1, P2, P3) assoziiert ist, zwischen einem Ein- oder aktivierten Modus, in dem es elektrischen Strom von dem genannten wenigstens einen der genannten wenigstens zwei Kanalverbindungsports (P1, P2, P3) ziehen kann, und einem Aus- oder deaktivierten Modus, in dem es keinen elektrischen Strom von dem genannten wenigstens einen der genannten wenigstens zwei Kanalverbindungsports (P1, P2, P3) ziehen kann, wobei das genannte Verfahren Steuermittel beinhaltet zum Bestimmen von ein oder mehr der Folgenden: in welchem Hochfrequenz-Betriebsmodus die Vorrichtung (102, 202) betrieben wird, den Verbindungsmitteltyp, den Montageort der Vorrichtung (102, 202) in der Zellenstandortanordnung, die Einrichtung, an der die Vorrichtung (102, 202) montiert wurde, und die genannten Steuermittel ein oder mehr Umgehungspfade (124, 134, 136) in der Vorrichtung (102, 202) gemäß dem erkannten Betriebsmodus und/oder einem anderen erkannten Status aktivieren und/oder deaktivieren.

15. Verfahren nach Anspruch 14, **dadurch gekennzeichnet, dass**, sobald das Steuermittel ein oder mehr elektrische Werte, die Ausrichtung, die Position, den Verbindungstyp, die an der Vorrichtung montierte Einrichtung (102, 202) und oder den Betriebsmodus der Vorrichtung (102, 202) erkannt hat, das Steuermittel den Umgehungspfad (124, 134, 136) in eine aktivierte und/oder deaktivierte Stellung schaltet und/oder das elektrische Lastmittel (130) zwischen dem aktivierten oder deaktivierten Modus bewegt, wobei der Umgehungsweg (124, 134, 136) und/oder das elektrische Lastmittel (130) dauernd und/oder bis zur Durchführung eines weiteren Eingriffs durch einen Benutzer in der genannten aktivierten und/oder deaktivierten Stellung bleibt.

16. Verfahren nach einem der Ansprüche 14 oder 15, **dadurch gekennzeichnet, dass** das Steuermittel den Hochfrequenz-Betriebsmodus und/oder die Ausrichtung der Vorrichtung (102, 202) durch Erkennen, welcher von dem wenigstens einen gemeinsamen Verbindungsport (P4) und/oder den wenigstens zwei Kanalverbindungsports (P1, P2, P3) anfänglich mit Strom versorgt wird, bestimmt, indem es erkennt, ob Gleichstrom, Spannung oder ein elektrischer Wert an dem Verbindungsport (P1, P2, P3, P4) vorhanden ist.

17. Verfahren nach Anspruch 16, **dadurch gekennzeichnet, dass**, falls im Gebrauch während eines anfänglichen Betriebsmodus-Einstellverfahrens der Vorrichtung (102, 202) am Standort Gleichstrom, Spannung oder ein oder mehr elektrische Werte an mehreren der wenigstens zwei Kanalverbindungsports (P1, P2, P3) erkannt wird, einer der Kanalverbindungsports (P1, P2, P3) als die Gleichstromquelle und/oder die Steuersignal- oder AISG-Steuersignalquelle ausgewählt wird und ein Umgehungspfad (124, 134, 136), der mit dem ausgewählten Port (P1, P2, P3) assoziiert ist, aktiviert wird und die Umgehungspfade (124, 134, 136), die mit den anderen, nicht ausgewählten Ports (P1, P2, P3) assoziiert sind, deaktiviert werden.

18. Verfahren nach Anspruch 17, **dadurch gekennzeichnet, dass** jeder der wenigstens zwei Kanalverbindungsports (P1, P2, P3) an der Vorrichtung (102, 202) mit einer vordefinierten Priorität oder Regel versehen ist, die mit derselben assoziiert ist, so dass, wenn das Steuermittel Gleichstrom, Spannung oder elektrischen Wert an mehreren der Kanalverbindungsports (P1, P2, P3) erkennt, es feststellen kann, welcher der Kanalverbindungsports (P1, P2, P3) die höchste Priorität hat, und somit, welcher der wenigstens zwei Kanalverbindungsports (P1, P2, P3) als die Gleichstromquelle und/oder die Steuersignalquelle zu verwenden ist.

## Revendications

1. Appareil de multiplexage (102, 202) incluant au moins un port de connexion commun (P4) et au moins deux ports de connexion de canal (P1, P2, P3), deux ou plusieurs voies de radiofréquence (106, 108, 110) étant connectées entre ledit au moins un port de connexion commun (P4) et lesdits au moins deux ports de connexion de canal (P1, P2, P3) pour transmettre et/ou recevoir deux ou plusieurs signaux de radiofréquence le long de celles-ci et **caractérisé en ce qu'**un moyen de charge électrique (130) est prévu dans/ou associé à au moins un desdits au moins deux ports de connexion de canal (P1, P2, P3) de telle sorte que :
le moyen de charge électrique (130) puisse absorber un courant électrique à partir dudit au moins un desdits au moins deux ports de connexion de canal (P1, P2, P3) mais ledit au moins un desdits au moins deux ports de connexion de canal (P1, P2, P3) n'est pas connecté, dans un sens CC, au port de connexion commun (P4) ; et
le moyen de charge électrique (130) associé audit au moins un desdits au moins deux ports de connexion de canal (P1, P2, P3) peut transiter entre un mode « on », ou activé, dans lequel il est apte à absorber un courant électrique à partir dudit au moins un desdits au moins deux ports de connexion de canal (P1, P2, P3), et un mode « off », ou désactivé, dans lequel il n'est pas apte à absorber un courant électrique à partir dudit au moins un desdits au moins deux ports de connexion de canal (P1, P2, P3).

2. Appareil selon la revendication 1 **caractérisé en ce que** le moyen de charge électrique (130) est une charge active et des moyens de commutation (138, 140, 142) sont prévus entre ledit au moins un desdits au moins deux ports de connexion de canal (P1, P2, P3) et la charge active pour permettre à la charge active d'être transitée sélectivement entre le mode « on » ou activé et le mode « off » ou désactivé.

3. Appareil selon n'importe quelle revendication précédente **caractérisé en ce que** la charge électrique (130) est une charge active et des moyens de commande sont prévus sur ou sont associés à la charge active pour permettre la commande des moyens de commutation (138, 140, 142) entre le mode « on » ou activé et le mode « off » ou désactivé et/ou pour permettre la commande du courant ou de la tension électrique en train d'être absorbé(e) par la charge active.

4. Appareil selon la revendication 1 **caractérisé en ce que** la transition entre lesdits modes activé et désactivé dépend du fait de savoir si l'au moins un desdits au moins deux ports de connexion de canal (P1, P2, P3) avec lequel les moyens de commutation (138, 140, 142) sont associés est configuré/mis en service pour fournir un CC, est requis de fournir un passage de CC à l'au moins un port de connexion commun (P4) et/ou à un équipement RF associé à l'au moins un desdits au moins deux ports de connexion de canal (P1, P2, P3) et/ou l'au moins un port de connexion commun (P4).

5. Appareil selon la revendication 1 **caractérisé en ce qu'**il est prévu au moins un trajet de dérivation (124, 134, 136) prévu entre l'au moins un port de connexion commun (P4) et au moins un desdits au moins deux ports de connexion de canal (P1, P2, P3) pour le passage de CC et/ou d'un ou plusieurs signaux de commande le long de celui-ci en utilisation et l'au moins un trajet de dérivation (124, 134, 136) est prévu pour assurer la dérivation d'au moins une partie des deux ou plusieurs trajets de radiofréquence (106, 108, 110) connectés entre l'au moins un port de connexion commun (P4) et lesdits au moins deux ports de connexion de canal (P1, P2, P3).

6. Appareil selon la revendication 5 **caractérisé en ce que** l'au moins un trajet de dérivation (124, 134, 136) peut transiter sélectivement entre un état « on », ou activé, et un état « off », désactivé ; et des moyens de commande sont prévus qui détectent une ou plusieurs valeurs électriques au niveau de ou associées à un ou plusieurs de l'au moins un port de connexion commun (P4) et/ou desdits au moins deux ports de connexion de canal (P1, P2, P3) pour commander le fait que l'au moins un trajet de dérivation (124, 134, 136) est activé ou désactivé.

7. Appareil selon n'importe laquelle des revendications 5 ou 6 **caractérisé en ce que** le moyen de charge électrique (130) est prévu dans ou associé à l'au moins un trajet de dérivation (124, 134, 136).

8. Appareil selon la revendication 3 **caractérisé en ce que** les moyens de commande sont agencés pour détecter lequel de l'au moins un port de connexion commun (P4) et/ou desdits au moins deux ports de connexion de canal (P1, P2, P3) a une tension CC qui est présente au niveau du port, et s'il est constaté que l'au moins un port de connexion commun (P4) a une tension CC qui est présente, le moyen de commande est apte à déterminer si l'appareil (102, 202) fonctionne dans un mode de démultiplexage dans un sens de transmission ou est localisé au niveau du haut d'un mât (2) ou s'il est constaté qu'un ou plusieurs desdits au moins deux ports de connexion de canal (P1, P2, P3) a/ont une tension CC qui est présente, le moyen de commande est apte à déterminer si l'appareil (102, 202) fonctionne dans un mode de multiplexage dans un sens de transmission ou est positionné au niveau d'une base d'un mât (2).

9. Appareil selon n'importe lesquelles des revendications précédentes **caractérisé en ce que** l'au moins un port de connexion commun (P4) est défini comme un port de connexion d'entrée et/ou de sortie sur l'appareil (102, 202) à travers lequel deux ou plusieurs fréquences ou gammes de fréquences RF combinées peuvent passer et chacun desdits au moins deux ports de connexion de canal (P1, P2, P3) est un port à travers lequel uniquement un sous-ensemble desdites fréquences ou gammes de fréquences peut passer.

10. Appareil selon n'importe lesquelles des revendications précédentes **caractérisé en ce que** les deux ou plusieurs ports de connexion de canal (P1, P2, P3) comprennent un premier et au moins un deuxième ports de connexion de canal pour permettre la transmission et/ou la réception d'un ou de plusieurs signaux de radiofréquence à une première fréquence ou gamme de fréquences et au moins une deuxième fréquence ou gamme de fréquences respectivement, la première fréquence ou gamme de fréquences étant différente de l'au moins deuxième fréquence ou gamme de fréquences.

11. Appareil selon la revendication 10 **caractérisé en ce que** le moyen de charge électrique (130) est directement prévu dans ou associé auxdites deux ou plusieurs voies de radiofréquence (106, 108, 110) sous la forme d'une première et d'au moins une deuxième voies de radiofréquence.

12. Appareil selon la revendication 1 **caractérisé en ce qu'**une ou plusieurs des deux ou plusieurs voies de radiofréquence (106, 108, 110) sont des voies de radiofréquence à sélection de fréquence.

13. Appareil selon n'importe lesquelles des revendications précédentes **caractérisé en ce que** l'appareil (102, 202) est capable d'opérer soit dans un mode de multiplexage de radiofréquence relativement à un sens de transmission dans lequel un ou plusieurs signaux de radiofréquence transmis et/ou reçus sont agencés de façon à traverser l'appareil (102, 202) entre ou à partir d'une pluralité des ports de connexion de canal (P1, P2, P3) jusqu'à un port de connexion de sortie unique ou commun (P4) ; un mode de démultiplexage de radiofréquence relativement à un sens de transmission dans lequel un ou plusieurs signaux de radiofréquence transmis et/ou reçus sont agencés de façon à traverser l'appareil ou provenir de l'appareil (102, 202) entre un port de connexion d'entrée unique ou commun (P4) jusqu'à la pluralité de ports de connexion de canal (P1, P2, P3) ; soit dans l'un ou l'autre mode parmi un mode de multiplexage de radiofréquence ou un mode de démultiplexage de radiofréquence alors que le mode de fonctionnement est déterminé par l'appareil (102, 202).

14. Procédé d'utilisation d'un agencement de site cellulaire incluant un appareil de multiplexage (102, 202) incluant au moins un port de connexion commun (P4) et au moins deux ports de connexion de canal (P1, P2, P3), deux ou plusieurs trajets de radiofréquence (106, 108, 110) étant connectés entre ledit au moins un port de connexion commun (P4) et lesdits au moins deux ports de connexion de canal (P1, P2, P3) pour transmettre et/ou recevoir deux ou plusieurs signaux de radiofréquence le long de ceux-ci, **caractérisé en ce qu'**un moyen de charge électrique (130) est prévu dans/ou associé à au moins un desdits au moins deux ports de connexion de canal (P1, P2, P3) de telle sorte que le moyen de charge électrique (130) puisse absorber un courant électrique à partir dudit au moins un desdits au moins deux ports de connexion de canal (P1, P2, P3) mais ledit au moins un desdits au moins deux ports de connexion de canal (P1, P2, P3) n'est pas connecté, dans un sens CC, au port de connexion commun (P4) ; et
le moyen de charge électrique (130) associé audit au moins un desdits au moins deux ports de connexion de canal (P1, P2, P3) peut transiter entre un mode « on », ou activé, dans lequel il est apte à absorber un courant électrique à partir dudit au moins un desdits au moins deux ports de connexion de canal (P1, P2, P3), et un mode « off », ou désactivé, dans lequel il n'est pas apte à absorber un courant électrique à partir dudit au moins un desdits au moins deux ports de connexion de canal (P1, P2, P3), ledit procédé incluant
un moyen de commande pour déterminer un ou plusieurs éléments parmi quel est le mode opérationnel de radiofréquence dans lequel l'appareil (102, 202) fonctionne, le type de moyen de connexion, la localisation du montage de l'appareil (102, 202) dans l'agencement de site cellulaire, l'équipement sur lequel l'appareil (102, 202) a été monté, et l'activation/la désactivation par ledit moyen de commande d'un ou de plusieurs trajets de dérivation (124, 134, 136) dans l'appareil (102, 202) en fonction du mode opérationnel détecté et/ou autre statut détecté.

15. Procédé selon la revendication 14 **caractérisé en ce qu'**une fois que le moyen de commande a détecté une ou plusieurs des valeurs électriques, l'orientation, la position, le type de connexion, l'équipement monté sur l'appareil (102, 202) et/ou le mode de fonctionnement de l'appareil (102, 202), le moyen de commande commute le trajet de dérivation (124, 134, 136) dans une position activée et/ou désactivée et/ou fait transiter le moyen de charge électrique (130) entre le mode activé ou désactivé, le trajet de dérivation (124, 134, 136) et/ou le moyen de charge électrique (130) reste/restent dans ladite position activée et/ou désactivée de manière permanente et/ou jusqu'à ce qu'une intervention ultérieure par un utilisateur soit entreprise.

16. Procédé selon n'importe laquelle des revendications 14 ou 15 **caractérisé en ce que** le moyen de commande détermine le mode de fonctionnement de radiofréquence et/ou l'orientation de l'appareil (102, 202) grâce à la détection de quel port parmi l'au moins un port de connexion commun (P4) et/ou lesdits au moins deux ports de connexion de canal (P1, P2, P3) est alimenté initialement grâce à la détection pour savoir si un CC, une tension ou une valeur électrique est présent(e) au niveau du port de connexion (P1, P2, P3, P4).

17. Procédé selon la revendication 16 **caractérisé en ce que** si un CC, une tension ou une ou plusieurs valeurs électriques est détecté(e) au niveau d'une pluralité desdits au moins deux ports de connexion de canal (P1, P2, P3) durant une procédure de configuration de mode opérationnel initiale de l'appareil (102, 202) in situ lors de l'utilisation, un des ports de connexion de canal (P1, P2, P3) est sélectionné comme étant la source de puissance CC et/ou le signal de commande ou la source de signal de commande AISG et un trajet de dérivation (124, 134, 136) associé au port sélectionné (P1, P2, P3) est activé et les trajets de dérivation (124, 134, 136) associés aux autres ports non sélectionnés (P1, P2, P3) sont désactivés.

18. Procédé selon la revendication 17 **caractérisé en ce que** chacun desdits au moins deux ports de connexion de canal (P1, P2, P3) sur l'appareil (102, 202) est doté d'une règle ou d'une priorité prédéfinie associée à celui-ci de telle sorte que lorsque le moyen de commande détecte un CC, une tension ou une valeur électrique au niveau d'une pluralité des ports de connexion de canal (P1, P2, P3), il peut identifier lequel des ports de connexion de canal (P1, P2, P3) a la priorité la plus élevée et par conséquent lequel desdits au moins deux ports de connexion de canal (P1, P2, P3) devrait être utilisé comme étant la source de puissance CC et/ou la source de signal de commande.
